# EUROPÄISCHE PATENTSCHRIFT

(11) **EP 3 884 569 B1**
(45) Veröffentlichungstag und Bekanntmachung des Hinweises auf die Patenterteilung: **14.10.2026**
(21) Anmeldenummer: 19806213.5
(22) Anmeldetag: 20.11.2019
(51) Int. Cl.: H02K 5/20, H02K 9/19, H02K 15/14

(54) **KÜHLMITTELLEITELEMENT UND KÜHLSYSTEM FÜR EINE ELEKTRISCHE MASCHINE**
COOLANT MEMBER AND COOLING SYSTEM FOR AN ELECTRIC MACHINE
RÉFRIGÉRANT ÉLÉMENT ET SYSTÈME DE REFROIDISSEMENT POUR UNE MACHINE ÉLECTRIQUE

(30) Priorität: 23.11.2018 DE 102018220183
(43) Veröffentlichungstag der Anmeldung: 29.09.2021
(73) Patentinhaber: VOLKSWAGEN AKTIENGESELLSCHAFT, 38440 Wolfsburg (DE)
(72) Erfinder: LENZ, Andreas, 34466 Wolfhagen (DE); NUSS, Viktor, 34134 Kassel (DE); RAUCHSCHWALBE, Matthias, 34225 Baunatal (DE)
(86) Internationale Anmeldenummer: PCT/EP2019/081914
(87) Internationale Veröffentlichungsnummer: WO 2020/104520

(56) Entgegenhaltungen:
- CN-A- 106 230 173
- US-A1- 2005 116 553
- US-A1- 2006 273 668
- US-A1- 2010 007 227

## Beschreibung

Die Erfindung betrifft ein Kühlmittelleitelement für ein Kühlsystem zur Kühlung einer elektrischen Maschine. Weiter betrifft die Erfindung ein entsprechendes Kühlsystem für eine elektrische Maschine.

Eine elektrische Maschine weist häufig einen Stator auf, welcher sich im Betrieb erwärmt. Um ein Überhitzen des Stators und damit der elektrischen Maschine verhindern zu können, weist die elektrische Maschine ein Kühlsystem auf, über welches eine Kühlung des Stators und damit der elektrischen Maschine erfolgen kann. Zur Führung eines Kühlmittels entlang einer Kühllaufbahn des Kühlsystems ist ein Kühlmittelleitelement vorgesehen. Es ist wünschenswert, dass mittels des Kühlmittelleitelements eine homogene Strömung entlang der Kühllaufbahn erreicht werden kann, und dass ein definierter Spalt zum Durchströmen des Kühlmittels zwischen dem Kühlmittelleitelement und der Kühllaufbahn ausgebildet werden kann.

Es ist bekannt, das Kühlmittelleitelement, welches üblicherweise eine Ringform aufweist, zu gießen oder zwei Teile miteinander durch eine Schweißverbindung zu verbinden. Derartige Kühlmittelleitelemente weisen jedoch hohe Fertigungstoleranzen auf, wodurch die Größe des ausgebildeten Spalts zum Durchströmen des Kühlmittels stark variieren kann, wodurch auch die Kühlwirkung stark schwanken kann.

In der US 2005 / 116 553 A1 ist eine Kühlvorrichtung für einen inneren Stator einer elektrischen Maschine offenbart. Der Stator umfasst einen im Wesentlichen zylindrischen Hohlraum mit einer im Wesentlichen zylindrischen Innenfläche. Die Kühlvorrichtung umfasst einen Körper, der eine äußere, im Wesentlichen zylindrische Kontaktfläche definiert. Die Kühlvorrichtung umfasst ferner ein Vorspannelement, das mit dem Körper verbunden ist. Das Vorspannelement ist so konfiguriert und bemessen, dass es die Kontaktfläche des Körpers gegen die Innenfläche des Rotors vorspannt, wenn die Kühlvorrichtung im Inneren des Hohlraums positioniert ist.

In der US 2010 / 007 227 A1 ist ein Kühlmantel für einen Motor offenbart, der einen extrudierten Mantelkörper umfasst mit einer äußeren Umfangsfläche, einer inneren Umfangsfläche und einer Vielzahl von diskreten Kühlkanälen, die sich zwischen der inneren und der äußeren Umfangsfläche befinden und eine mehrdirektionale Flüssigkeitsströmung ermöglichen. Ein Flüssigkeitseinlass ist vorgesehen, um Kühlflüssigkeit in den Mantelkörper zu leiten, und ein Flüssigkeitsauslass, um erwärmte Flüssigkeit aus dem Mantelkörper herauszuleiten.

In der US 2006 / 273 668 A1 ist eine Kühlvorrichtung mit einem allgemein zylindrischen Körper, der in den allgemein zylindrischen inneren Stator einer elektrischen Maschine eingesetzt wird, beschrieben. Der Körper umfasst eine zylindrische äußere Kontaktfläche, die so konfiguriert und bemessen ist, dass sie die Innenfläche des Stators berührt. Die Bodenfläche des Körpers ist mit einem Kanal versehen, der teilweise durch eine Abdeckung verschlossen ist, um einen peripheren Fluiddurchgang im Inneren des Körpers zu schaffen. Eine Einlass- und eine Auslassöffnung sind vorgesehen.

In der CN 106 230 173 A wird ein Verfahren zur Wasserkühlung eines Motors beschrieben. In der Außenwand eines Gehäuses sind in Umfangsrichtung gleichmäßig verteilt axiale Wärmeabfuhrnuten angeordnet. In jeder der Statoreinbaunuten in der Innenwand des Gehäuses ist ein Stator angeordnet.

Der Erfindung liegt die Aufgabe zugrunde, ein Kühlmittelleitelement und ein Kühlsystem zur Verfügung zu stellen, bei welchen ein möglichst definierter Spülspalt ausgebildet werden kann.

Die Lösung der erfindungsgemäßen Aufgabe erfolgt mit den Merkmalen des unabhängigen Anspruchs 1. Bevorzugte Ausgestaltungen und Weiterbildungen der Erfindung sind in den abhängigen Ansprüchen angegeben.

Das Kühlmittelleitelement gemäß der Erfindung weist einen Grundkörper auf, an welchem an einer nach radial innen zeigenden Umfangsfläche des Grundkörpers mindestens ein Führungselement zur Führung eines Kühlmittels angeordnet ist, wobei der Grundkörper einen ersten Endabschnitt und einen zweiten Endabschnitt aufweist, wobei in einem verbundenen Zustand des ersten Endabschnitts mit dem zweiten Endabschnitt der Grundkörper eine Ringform ausbildet, wobei in dem verbundenen Zustand der erste Endabschnitt mit dem zweiten Endabschnitt federnd verspannt verbunden ist.

Erfindungsgemäß ist es nunmehr nicht mehr vorgesehen, dass das Kühlmittelleitelement starr ausgebildet ist, sondern das Kühlmittelleitelement weist in einem verbauten Zustand, bei welchem das Kühlmittelleitelement in der elektrischen Maschine angeordnet ist, eine definierte Flexibilität auf, so dass Fertigungstoleranzen von dem Kühlmittelleitelement ausgeglichen werden können und damit ein definierter Spalt zum Durchströmen des Kühlmittels zwischen dem Kühlmittelleitelement und einer Kühllaufbahn ausgebildet werden kann. Das Kühlmittelleitelement weist dafür einen Grundkörper auf, welcher vorzugsweise einen axial ausgebildeten Schlitz aufweist, wobei durch den axial ausgebildeten Schlitz der Grundkörper einen ersten Endabschnitt und einen zweiten Endabschnitt aufweist, wobei die beiden Endabschnitte miteinander verbunden werden, so dass der Grundkörper in einem verbundenen Zustand und damit auch in dem in dem elektrischen Gerät verbauten Zustand eine Ringform aufweist. Die beiden Endabschnitte werden erfindungsgemäß derart miteinander verbunden, dass sie im verbundenen Zustand federnd verspannt verbunden sind. Hierdurch weist der Grundkörper und damit das Kühlmittelleitelement eine Federwirkung auf, wodurch im verbauten Zustand des Kühlmittelleitelements über die Verbindung der beiden Endabschnitte miteinander ein federnder Toleranzausgleich ausgebildet werden kann. Durch die federnde Verspannung der beiden Endabschnitte miteinander kann sichergestellt werden, dass im verbauten Zustand die Führungselemente zur Führung des Kühlmittels an der Kühllaufbahn des Kühlsystems anliegen und dadurch ein definiert konstanter Spülspalt ausgebildet werden kann.

Die federnde Verspannung der beiden Endabschnitte des Grundkörpers miteinander kann auf verschiedene Art und Weisen ausgebildet sein.

Erfindungsgemäß ist es vorgesehen, dass zur Ausbildung der federnden Verspannung der erste Endabschnitt einen federnd ausgebildeten Verrastungsbügel aufweist, welcher in dem verbundenen Zustand an einem Rastelement des zweiten Endabschnitts hinterrasten kann. Durch die federnde Ausbildung des Verrastungsbügels kann auch in einem verbundenen Zustand der beiden Endabschnitte, wenn der Verrastungsbügel hinter dem Rastelement verrastet ist, noch eine Federwirkung vorhanden sein, so dass auch im verbundenen und damit im verrasteten Zustand ein Toleranzausgleich erreicht werden kann. Der federnd ausgebildete Verrastungsbügel bildet zusammen mit dem Rastelement eine Art Spannschloss aus. Zum Verbinden der beiden Endabschnitte kann der Verrastungsbügel über das Rastelement hinweggeschoben werden, bis der Verrastungsbügel hinter dem Rastelement verrasten kann.

Der Verrastungsbügel kann derart ausgebildet sein, dass dieser einen ersten Federabschnitt und einen zweiten Federabschnitt aufweist, wobei der erste Federabschnitt und der zweite Federabschnitt in dem verbundenen Zustand an dem Rastelement hinterrasten können. Durch das Vorsehen von zwei Federabschnitten kann die Federwirkung und damit der Toleranzausgleich des Verrastungsbügels weiter verbessert werden. Die Federabschnitte sind vorzugsweise jeweils in Form eines gebogenen Steges ausgebildet. Beispielsweise kann der Steg S-förmig gebogen sein. Vorzugsweise sind die beiden Federabschnitte spiegelsymmetrisch zueinander ausgebildet, so dass sie die gleiche Federwirkung aufbringen können. Alternativ kann der Verrastungsbügel einen zentralen oder mehrteiligen Federabschnitt aufweisen.

Weiter kann es vorgesehen sein, dass der Verrastungsbügel eine Anschlagsfläche aufweist, welche zum Verhindern einer Überspannung des Verrastungsbügels mit dem Rastelement zusammenwirken kann. Mittels der Anschlagsfläche kann der Federweg der Federabschnitte begrenzt werden, so dass ein Beschädigen der Federabschnitte und damit des Verrastungsbügels aufgrund einer zu großen auf den Verrastungsbügel bzw. auf die Federabschnitte wirkenden Kraft bzw. Spannung verhindert werden kann. Die Anschlagsfläche ist vorzugsweise derart an dem Verrastungsbügel angeordnet, dass sie in Richtung des Rastelements gerichtet ist und damit im verbundenen Zustand der beiden Endabschnitte miteinander dem Rastelement gegenüberliegt.

Der Verrastungsbügel kann einen Mittelabschnitt aufweisen, an welchem die Anschlagsfläche ausgebildet sein kann, wobei an einer ersten Seite des Mittelabschnitts der erste Federabschnitt und an einer der ersten Seite gegenüberliegenden zweiten Seite des Mittelabschnitts der zweite Federabschnitt angeformt sein kann. Der Mittelabschnitt ist vorzugsweise mittig des Verrastungsbügels ausgebildet. Im Gegensatz zu den beiden Federabschnitten ist der Mittelabschnitt vorzugsweise starr ausgebildet, so dass der Mittelabschnitt den beiden an dem Mittelabschnitt angeformten Federabschnitten eine Stabilität geben kann. Die beiden Federabschnitte sind vorzugsweise spiegelsymmetrisch zueinander an den beiden sich gegenüberliegenden Seiten des Mittelabschnitts angeformt. Der Mittelabschnitt ist vorzugsweise einstückig mit den beiden Federabschnitten ausgebildet. Die Anschlagsfläche ist vorzugsweise durch eine im verbundenen Zustand der beiden Endabschnitte miteinander in Richtung des Rastelements zeigenden Kantenfläche des Mittelabschnitts ausgebildet.

Der Verrastungsbügel kann ferner einen Steg aufweisen, mittels welchem der Verrastungsbügel an dem ersten Endabschnitt des Grundkörpers angebunden sein kann, wobei das Rastelement einen Durchgangsspalt aufweisen kann, durch welchen der Steg des Verrastungsbügels im verbundenen Zustand geführt sein kann. An einem ersten Ende des Stegs ist dieser vorzugsweise an dem ersten Endabschnitt des Grundkörpers angebunden, vorzugsweise einstückig angebunden. An einem dem ersten Ende gegenüberliegenden zweiten Ende des Stegs ist vorzugsweise der Mittelabschnitt angebunden, vorzugsweise einstückig angebunden. Der Steg weist bevorzugt ebenfalls eine Federwirkung auf, so dass der Steg eine Art Flexibilitätselement für den Verrastungsbügel ausbildet. Der Durchgangsspalt ist vorzugsweise durch das Rastelement hindurch ausgebildet, so dass durch den Durchgangsspalt das Rastelement in zwei Rastelementteile getrennt bzw. aufgeteilt ist. Die Rastelementteile bilden eine seitliche Führung des Steges aus, wenn der Steg durch den Durchgangsspalt geführt ist, so dass eine Begrenzung gegen ein axiales Verschieben der beiden Endabschnitte zueinander hierdurch ausgebildet werden kann.

Um das Verbinden der beiden Endabschnitte des Grundkörpers miteinander und damit die Montage des Kühlmittelleitelements zu erleichtern, kann das Rastelement eine Rampenform aufweisen, auf welche der Verrastungsbügel definiert aufgeschoben werden kann. Durch die Rampenform kann das Rastelement zudem eine definierte Rastfläche mit einer ausreichenden Höhe aufweisen, an welcher der Verrastungsbügel im verbundenen Zustand sicher hinterrasten kann.

Weiter kann es vorgesehen sein, dass der erste Endabschnitt eine erste Dichtfläche und dass der zweite Endabschnitt eine zweite Dichtfläche aufweisen, wobei die erste Dichtfläche mit der zweiten Dichtfläche dichtend zusammenwirken kann. Mittels der beiden Dichtflächen kann ein Überströmen des Kühlmittels im Bereich der beiden Endabschnitte verhindert werden. Beispielsweise können die beiden Dichtflächen flächig aufeinander aufliegen, um eine Dichtwirkung auszubilden. Vorzugsweise bilden die beiden Dichtflächen eine Labyrinthdichtung aus. Weiter kann es auch möglich sein, dass die beiden Dichtflächen derart geformt sind, dass sie eine mäanderförmige Dichtung ausbilden.

Der Grundkörper kann ferner eine federnd ausgebildete Abdichtung aufweisen, welche mit einem das Kühlmittelleitelement in einem verbauten Zustand umgebenden Gehäuse zusammenwirken kann. Die federnde Abdichtung steht vorzugsweise in Richtung des umgebenden Gehäuses hervor, so dass es mit dem Gehäuse zusammenwirken kann, ohne die restliche Funktion des Kühlmittelleitelements zu beeinflussen. Die federnde Abdichtung ist vorzugsweise an einem umlaufenden Rand des Grundkörpers ausgebildet, so dass auch die federnde Abdichtung vorzugsweise umlaufend an dem Grundkörper ausgebildet sein kann.

Das Kühlmittelleitelement ist bevorzugt aus einem Kunststoffmaterial ausgebildet, so dass sich das Kühlmittelleitelement durch ein besonders geringes Gewicht auszeichnen kann. Ist das Kühlmittelleitelement aus einem Kunststoffmaterial ausgebildet, kann es in einem Spritzgussverfahren hergestellt sein. Alternativ kann es auch möglich sein, dass das Kühlmittelleitelement aus einem Metallblech ausgebildet ist.

Die Erfindung sieht ferner ein Kühlsystem zur Kühlung einer elektrischen Maschine vor, welches eine Einlassöffnung zur Zuführung eines Kühlmittels, eine Auslassöffnung zur Abführung eines Kühlmittels, und eine Kühllaufbahn, entlang welcher während eines Kühlvorgangs aus der Einlassöffnung austretendes Kühlmittel fließt und entlang welcher während des Kühlvorgangs das Kühlmittel zu der Auslassöffnung fließt, aufweist, wobei an der Kühllaufbahn ein Kühlmittelleitelement ausgebildet ist, welches wie vorstehend beschrieben aus- und weitergebildet sein kann.

Das Kühlmittelleitelement kann die Kühllaufbahn radial überdecken bzw. umspannen, so dass das Kühlmittel kontrolliert zwischen der Kühllaufbahn und dem Kühlmittelleitelement geführt werden kann. Zwischen dem Kühlmittelleitelement und der Kühllaufbahn kann dann ein Spalt zum Durchströmen des Kühlmittels ausgebildet sein. Die Kühllaufbahn kann beispielsweise ein Kühlmantel sein, welcher ein Gehäuse beispielsweise eines Stators einer elektrischen Maschine umgeben kann.

Die Lösung der erfindungsgemäßen Aufgabe erfolgt ferner mittels einer elektrischen Maschine, welche ein Gehäuse aufweist, wobei an einer Außenumfangsfläche ein Kühlsystem angeordnet ist, welches wie vorstehend beschrieben aus- und weitergebildet sein kann. Die elektrische Maschine kann ferner ein weiteres Gehäuse aufweisen, welches das Kühlsystem und damit auch das Kühlmittelleitelement radial umschließt.

Die elektrische Maschine kann beispielsweise als ein Elektromotor eines Kraftfahrzeugs ausgebildet sein.

Weitere, die Erfindung verbessernde Maßnahmen werden nachstehend anhand der Beschreibung bevorzugter Ausgestaltungen der Erfindung anhand der nachfolgenden Figuren näher dargestellt.

Es zeigen:
- Fig. 1: eine schematische Darstellung eines Kühlmittelleitelements gemäß der Erfindung,
- Fig. 2: eine schematische Darstellung eines Ausschnitts des in Fig. 1 gezeigten Kühlmittelleitelements im Bereich der beiden Endabschnitte des Kühlmittelleitelements,
- Fig. 3: eine Schnittdarstellung eines Teils einer elektrischen Maschine mit einem Kühlsystem und einem entlang der in Fig. 1 eingezeichneten Linie A-A geschnittenen Kühlmittelleitelement, und
- Fig. 4: eine Detaildarstellung der in Fig. 3 gezeigten Schnittdarstellung.

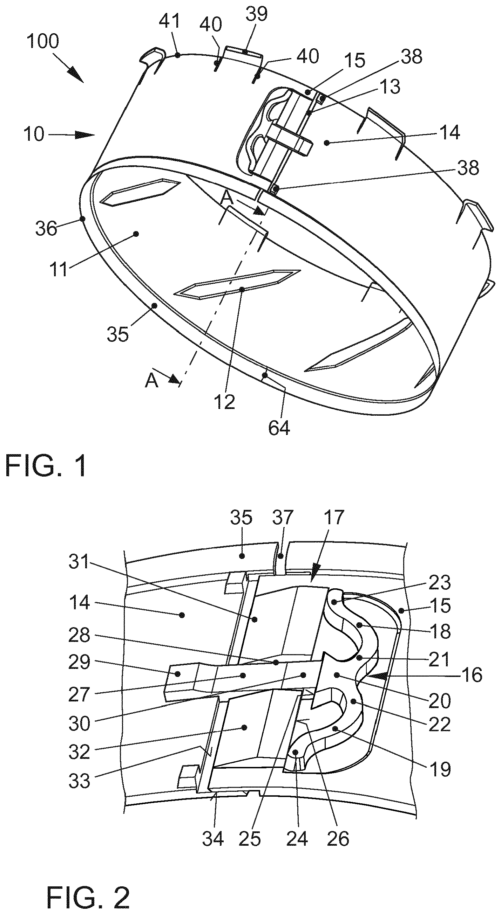

Fig. 1 zeigt ein Kühlmittelleitelement 100, welches in einer elektrischen Maschine 400 angeordnet werden kann.

Das Kühlmittelleitelement 100 weist einen Grundkörper 10 auf, welcher an seiner nach radial innen zeigenden Umfangsfläche 11 mehrere Führungselemente 12 zur Führung eines Kühlmittels aufweist. Die Führungselemente 12 sind jeweils in Form von Rippen ausgebildet, welche von der Umfangsfläche 11 nach radial vorne vorstehen.

Der Grundkörper 10 weist einen axial verlaufenden Schlitz 13 auf, so dass der Grundkörper 10 zwei sich gegenüberliegende Endabschnitte 14, 15 aufweist. In einem verbundenen Zustand der beiden Endabschnitte 14, 15 miteinander, weist der Grundkörper 10 eine Ringform auf, wie in Fig. 1 zu erkennen ist. Die beiden Endabschnitte 14, 15 sind federnd verspannt miteinander verbunden, wie insbesondere in der Detaildarstellung der Fig. 2 zu erkennen ist.

Zur Ausbildung der federnden Verspannung weist der erste Endabschnitt 14 einen federnd ausgebildeten Verrastungsbügel 16 auf, welcher in dem verbundenen Zustand an einem Rastelement 17 des zweiten Endabschnitts 15 hinterrastet ist.

Der Verrastungsbügel 16 weist einen ersten Federabschnitt 18 und einen zweiten Federabschnitt 19 auf. Mit den beiden Federabschnitten 18, 19 verrastet der Verrastungsbügel 16 an dem Rastelement 17, wobei durch die Verrastung der Federabschnitte 18, 19 die Verrastung und damit die Verbindung der beiden Endabschnitte 14, 15 auch im verbundenen Zustand federnd ausgebildet ist, so dass ein federnder Toleranzausgleich des Kühlmittelleitelements 100 im verbundenen Zustand der Endabschnitte 14, 15 insbesondere über die Federabschnitte 18, 19 des Verrastungsbügels 16 zur Verfügung gestellt werden kann.

Die beiden Federabschnitte 18, 19 sind jeweils in Form eines gebogenen Steges ausgebildet, wobei der Steg Im Wesentlichen S-förmig gebogen ausgebildet ist.

Die beiden Federabschnitte 18, 19 sind an einem Mittelabschnitt 20 des Verrastungsbügels 16 angebunden, wobei der erste Federabschnitt 18 an einer ersten Seite 21 des Mittelabschnitts 20 und der zweite Federabschnitt 19 an einer der ersten Seite 21 gegenüberliegenden zweiten Seite 22 des Mittelabschnitts 20 angebunden ist. Die beiden Federabschnitte 18, 19 sind spiegelsymmetrisch zueinander angeordnet. Gegenüberliegend zu der Anbindung der Federabschnitte 18, 19 an die jeweilige Seite 21, 22 des Mittelabschnitts 20 weisen die Federabschnitte 18, 19 jeweils ein freies Ende 23, 24 auf. Mit diesem freien Ende 23, 24 verrasten die Federabschnitte 18, 19 an dem Rastelement 17. Die freien Enden 23, 24 sind die jeweils am weitesten außen liegenden Bereiche des Verrastungsbügels 16.

Der Mittelabschnitt 20 ist in der Mitte des Verrastungsbügels 16 angeordnet. Der Mittelabschnitt 20 selbst ist vorzugsweise nicht federnd, sondern axial und tangential starr ausgebildet, um dem Verrastungsbügel 16 und insbesondere den Federabschnitten 18, 19 des Verrastungsbügels 16 Stabilität geben zu können.

An dem Mittelabschnitt 20 ist eine Anschlagsfläche 25 ausgebildet, welche zum Verhindern einer Überspannung des Verrastungsbügels 16 mit dem Rastelement 17 zusammenwirken kann. Die Anschlagsfläche 25 ist an einem Kantenbereich des Mittelabschnitts 20 ausgebildet, welcher im verbundenen Zustand in Richtung des Rastelements 17 zeigt. Die Anschlagsfläche 25 verläuft parallel zu einer Rastfläche 26 des Rastelements 17, an welcher auch die Federabschnitte 18, 19 mit ihren freien Enden 23, 24 im verbundenen Zustand hinterrastend anliegen.

Weiter weist der Verrastungsbügel 16 einen Steg 27 auf, mittels welchem der Verrastungsbügel 16 an dem ersten Endabschnitt 14 des Grundkörpers 10 einstückig angebunden ist. Das Rastelement 17 weist einen Durchgangsspalt 28 auf, durch welchen der Steg 27 des Verrastungsbügels 16 im verbundenen Zustand, wie in Fig. 2 gezeigt ist, geführt ist. An einem ersten Ende 29 des Stegs 27 ist dieser an dem ersten Endabschnitt 14 des Grundkörpers 10 angebunden. An einem dem ersten Ende 29 gegenüberliegenden zweiten Ende 30 des Stegs 27 ist der Steg 27 an den Mittelabschnitt 20 angebunden. Im Bereich der Anbindung weist der Mittelabschnitt 20 eine größere Breite auf als der Steg 27, so dass seitlich von dem Steg 27 die Anschlagsfläche 25 an dem Mittelabschnitt 20 ausgebildet sein kann.

Der Durchgangsspalt 28 ist durch das Rastelement 17 hindurch ausgebildet, so dass durch den Durchgangsspalt 28 das Rastelement 17 in zwei Rastelementteile 31, 32 getrennt bzw. aufgeteilt ist. Die Rastelementteile 31, 32 bzw. die Wandung des Durchgangsspalts 28 bilden eine seitliche Führung des Steges 27 aus, wenn der Steg 27 durch den Durchgangsspalt 28 geführt ist.

Wie in Fig. 2 ferner zu erkennen ist, weist das Rastelement 17 eine Rampenform auf. In Richtung der Rastfläche 26 nimmt die Dicke des Rastelements 17 durch die Rampenform zu, so dass die Rastfläche 26 eine ausreichende Höhe aufweist, damit die Federabschnitte 18, 19 an der Rastfläche 26 sicher hinterhaken können.

Um ein dichtes Anliegen der beiden Endabschnitte 14, 15 aneinander erreichen zu können, weisen der erste Endabschnitt 14 eine erste Dichtfläche 33 und der zweite Endabschnitt 15 eine zweite Dichtfläche 34 auf, wobei die beiden Dichtflächen 33, 34 zusammen eine Labyrinthdichtung ausbilden. Die erste Dichtfläche 33 ist in Form einer von dem ersten Endabschnitt 14 vorstehenden Kantenfläche ausgebildet, und die zweite Dichtfläche 34 ist in Form einer von dem zweiten Endabschnitt 15 vorstehenden Kantenfläche ausgebildet, wobei im verbundenen Zustand der beiden Endabschnitte 14, 15 miteinander die erste Dichtfläche 33 flächig auf der zweiten Dichtfläche 34 aufliegt.

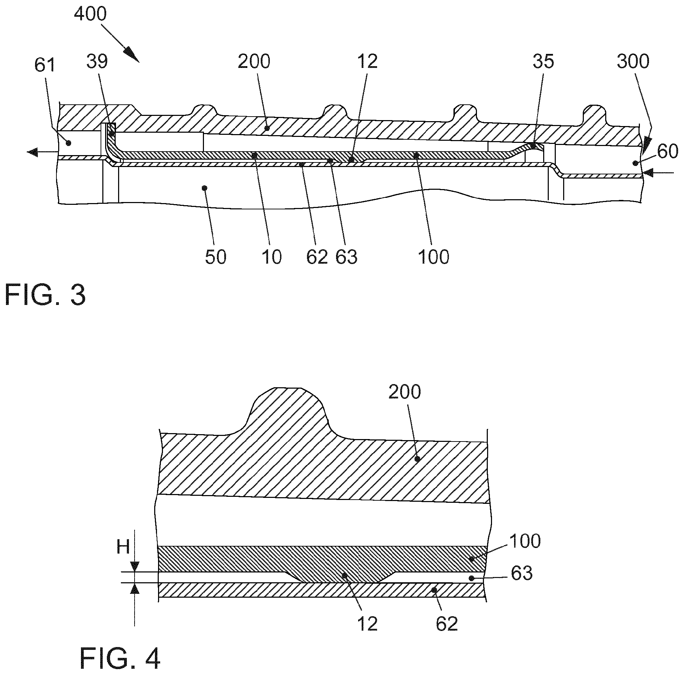

Der Grundkörper 10 weist ferner eine federnd ausgebildete Abdichtung 35 auf, welche mit einem das Kühlmittelleitelement 100 in einem verbauten Zustand umgebenden Gehäuse 200 zusammenwirken kann, wie in Fig. 3 zu erkennen ist. Die federnde Abdichtung 35 steht in Richtung des umgebenden Gehäuses 200 hervor, so dass es mit dem Gehäuse 200 zusammenwirken kann, ohne die restliche Funktion des Kühlmittelleitelements 100 zu beeinflussen. Die federnde Abdichtung 35 ist an einem umlaufenden Rand 36 des Grundkörpers 10 ausgebildet, so dass auch die federnde Abdichtung 35 umlaufend an dem Grundkörper 10 ausgebildet ist. Die federnde Abdichtung 35 ist mit einem Einschnitt 64 versehen. Der Einschnitt 64 dient dazu, die Abdichtung flexibler zu gestalten. Zusätzlich kann er auch zum Entlüften des Systems genutzt werden. In einer nicht dargestellten Variante können auch mehrere auf den Umfang verteilte Einschnitte vorgesehen werden.

Im Bereich der Abdichtung 35 bzw. des Randes 26 weist der Grundkörper 10 einen Entlüftungsspalt 37 auf, welcher im Bereich der Verbindung der beiden Endabschnitte 14, 15 miteinander angeordnet ist, wie in Fig. 1 und 2 zu erkennen ist.

Im Bereich des ersten Endabschnitts 14 des Grundkörpers 10 sind ferner zwei Montageanschläge 38 ausgebildet, welche als Begrenzungsanschlag für den zweiten Endabschnitt 15 des Grundkörpers 10 dienen.

Ferner sind an dem Grundkörper 10 umlaufend nach radial außen gerichtete Befestigungshaken 39 ausgebildet, welche im verbauten Zustand in das Gehäuse 200 einhaken, wie in Fig. 3 zu erkennen ist, um das Kühlmittelleitelement 100 gegen ein axiales und radiales Verschieben zu sichern. Die Befestigungshaken 39 sind federnd an dem Grundkörper 10 ausgebildet, indem im Bereich der Anbindung der Befestigungshaken 39 an dem Grundkörper 10 Schlitze 40 in dem Grundkörper 10 ausgebildet sind. Die Befestigungshaken 39 sind an dem dem Rand 36 gegenüberliegenden Rand 41 des Grundkörpers 10 ausgebildet. Fig. 3 zeigt eine Schnittdarstellung eines Teils einer elektrischen Maschine 400 mit einem Kühlsystem 300 und einem entlang der in Fig. 1 eingezeichneten Linie A-A geschnittenen Kühlmittelleitelement 100. Das Kühlsystem 300 ist radial außen und umlaufend um ein Gehäuse 50 der elektrischen Maschine 400 angeordnet, wobei das Gehäuse 50 beispielsweise ein Gehäuse 50 eines Stators sein kann.

Das Kühlsystem 300 weist eine Einlassöffnung 60 zur Zuführung eines Kühlmittels und eine Auslassöffnung 61 zur Abführung des erwärmten Kühlmittels auf. Das Kühlsystem 300 weist ferner eine Kühllaufbahn 62 auf, entlang welcher während eines Kühlvorgangs aus der Einlassöffnung 60 austretendes Kühlmittel fließt und entlang welcher während des Kühlvorgangs das Kühlmittel zu der Auslassöffnung 61 fließt, wie mit den Pfeilen angedeutet ist.

Die Kühllaufbahn 62 ist radial innen von dem Kühlmittelleitelement 100 angeordnet, so dass zwischen der Kühllaufbahn 62 und dem Kühlmittelleitelement ein Spalt 63 ausgebildet ist, durch welchen das Kühlmittel fließt. Die Führungselemente 12 des Kühlmittelleitelements 100 liegen flächig auf der Kühllaufbahn 62 auf, so dass durch die Höhe der Führungselemente 12 eine definierte Höhe H des Spalts 63 ausgebildet wird, wie in Fig. 4 gezeigt ist, wobei die Höhe H des Spalts 63 über den gesamten Umfang des Kühlmittelleitelements 100 konstant bleibt.

Die Erfindung beschränkt sich in ihrer Ausführung nicht auf die vorstehend angegebenen bevorzugten Ausgestaltungen. Vielmehr ist eine Anzahl von Varianten denkbar, welche von den dargestellten Lösungen auch bei grundsätzlich anders gearteten Ausführungen Gebrauch macht. Sämtliche aus den Ansprüchen der Beschreibung oder den Zeichnungen hervorgehende Merkmale und/oder Vorteile einschließlich konstruktiven Einzelheiten räumlicher Anordnungen und Verfahrensschritte können sowohl für sich als auch in den verschiedensten Kombinationen erfindungswesentlich sein.

### Bezugszeichenliste

- 100: Kühlmittelleitelement
- 200: Gehäuse
- 300: Kühlsystem
- 400: Elektrische Maschine
- 10: Grundkörper
- 11: Umfangsfläche
- 12: Führungselement
- 13: Schlitz
- 14: Erster Endabschnitt
- 15: Zweiter Endabschnitt
- 16: Verrastungsbügel
- 17: Rastelement
- 18: Erster Federabschnitt
- 19: Zweiter Federabschnitt
- 20: Mittelabschnitt
- 21: Erste Seite
- 22: Zweite Seite
- 23: Freies Ende
- 24: Freies Ende
- 25: Anschlagsfläche
- 26: Rastfläche
- 27: Steg
- 28: Durchgangsspalt
- 29: Erstes Ende
- 30: Zweites Ende
- 31: Rastelementteil
- 32: Rastelementteil
- 33: Erste Dichtfläche
- 34: Zweite Dichtfläche
- 35: Abdichtung
- 36: Rand
- 37: Entlüftungsspalt
- 38: Montageanschlag
- 39: Befestigungshaken
- 40: Schlitz
- 41: Rand
- 50: Gehäuse
- 60: Einlassöffnung
- 61: Auslassöffnung
- 62: Kühllaufbahn
- 63: Spalt
- 64: Einschnitt
- H: Höhe

## Patentansprüche

1. Kühlmittelleitelement (100) für ein Kühlsystem (300) zur Kühlung einer elektrischen Maschine (400), mit einem Grundkörper (10), an welchem an einer nach radial innen zeigenden Umfangsfläche (11) des Grundkörpers (10) mindestens ein Führungselement (12) zur Führung eines Kühlmittels angeordnet ist, wobei der Grundkörper (10) einen ersten Endabschnitt (14) und einen zweiten Endabschnitt (15) aufweist, wobei in einem verbundenen Zustand des ersten Endabschnitts (14) mit dem zweiten Endabschnitt (15) der Grundkörper (10) eine Ringform ausbildet, wobei in dem verbundenen Zustand der erste Endabschnitt (14) mit dem zweiten Endabschnitt (15) federnd verspannt verbunden ist, **dadurch gekennzeichnet, dass** zur Ausbildung der federnden Verspannung der erste Endabschnitt (14) einen federnd ausgebildeten Verrastungsbügel (16) aufweist, welcher in dem verbundenen Zustand an einem Rastelement (17) des zweiten Endabschnitts (15) hinterrastet.

2. Kühlmittelleitelement (100) nach Anspruch 1, **dadurch gekennzeichnet, dass** der Verrastungsbügel (16) einen ersten Federabschnitt (18) und einen zweiten Federabschnitt (19) aufweist, wobei der erste Federabschnitt (18) und der zweite Federabschnitt (19) in dem verbundenen Zustand an dem Rastelement (17) hinterrasten.

3. Kühlmittelleitelement (100) nach Anspruch 1 oder 2, **dadurch gekennzeichnet, dass** der Verrastungsbügel (16) eine Anschlagsfläche (25) aufweist, welche zum Verhindern einer Überspannung des Verrastungsbügels (16) mit dem Rastelement (17) zusammenwirkt.

4. Kühlmittelleitelement (100) nach Anspruch 3, **dadurch gekennzeichnet, dass** der Verrastungsbügel (16) einen Mittelabschnitt (20) aufweist, an welchem die Anschlagsfläche (25) ausgebildet ist, wobei an einer ersten Seite (21) des Mittelabschnitts (20) der erste Federabschnitt (18) und an einer der ersten Seite (21) gegenüberliegenden zweiten Seite (22) des Mittelabschnitts (20) der zweite Federabschnitt (19) angeformt sind.

5. Kühlmittelleitelement (100) nach einem der Ansprüche 1 bis 4, **dadurch gekennzeichnet, dass** der Verrastungsbügel (16) einen Steg (27) aufweist, mittels welchem der Verrastungsbügel (16) an dem ersten Endabschnitt (14) angebunden ist, wobei das Rastelement (17) einen Durchgangsspalt (28) aufweist, durch welchen der Steg (27) des Verrastungsbügels (16) im verbundenen Zustand geführt ist.

6. Kühlmittelleitelement (100) nach einem der Ansprüche 1 bis 5, **dadurch gekennzeichnet, dass** das Rastelement (17) eine Rampenform aufweist.

7. Kühlmittelleitelement (100) nach einem der Ansprüche 1 bis 6, **dadurch gekennzeichnet, dass** der erste Endabschnitt (14) eine erste Dichtfläche (33) und dass der zweite Endabschnitt (15) eine zweite Dichtfläche (34) aufweist, wobei die erste Dichtfläche (33) mit der zweiten Dichtfläche (34) dichtend zusammenwirkt.

8. Kühlmittelleitelement (100) nach einem der Ansprüche 1 bis 7, **dadurch gekennzeichnet, dass** der Grundkörper (10) eine federnd ausgebildete Abdichtung (35) aufweist, welche mit einem das Kühlmittelleitelement (100) in einem verbauten Zustand umgebenden Gehäuse (200) zusammenwirkt.

9. Kühlsystem (300) zur Kühlung einer elektrischen Maschine (400), mit einer Einlassöffnung (60) zur Zuführung eines Kühlmittels,
einer Auslassöffnung (61) zur Abführung des Kühlmittels,
einer Kühllaufbahn (63), entlang welcher während eines Kühlvorgangs aus der Einlassöffnung (60) austretendes Kühlmittel fließt und entlang welcher während des Kühlvorgangs das Kühlmittel zu der Auslassöffnung (61) fließt,
wobei an der Kühllaufbahn (63) ein Kühlmittelleitelement (100) angeordnet ist, welches nach einem der Ansprüche 1 bis 8 ausgebildet ist.

## Claims

1. Coolant conducting element (100) for a cooling system (300) for cooling an electric machine (400), comprising a main body (10) on which at least one guide element (12) for guiding a coolant is arranged on a radially inwardly facing circumferential surface (11) of the main body (10), the main body (10) having a first end portion (14) and a second end portion (15), the main body (10) forming a ring shape when the first end portion (14) is connected to the second end portion (15), the first end portion (14) being connected to the second end portion (15) with spring tension in the connected state, **characterized in that**, in order to form the spring tension, the first end portion (14) has a spring-loaded locking bow (16) which engages behind a locking element (17) of the second end portion (15) in the connected state.

2. Coolant conducting element (100) according to claim 1,
**characterized in that** the locking bow (16) has a first spring portion (18) and a second spring portion (19), the first spring portion (18) and the second spring portion (19) engaging behind the locking element (17) in the connected state.

3. Coolant conducting element (100) according to claim 1 or 2,
**characterized in that** the locking bow (16) has a stop surface (25) which interacts with the locking element (17) to prevent over-tensioning of the locking bow (16).

4. Coolant conducting element (100) according to claim 3,
**characterized in that** the locking bow (16) has a central portion (20) on which the stop surface (25) is formed, the first spring portion (18) being integrally formed on a first side (21) of the central portion (20) and the second spring portion (19) being integrally formed on a second side (22) of the central portion (20) opposite the first side (21).

5. Coolant conducting element (100) according to any of claims 1 to 4,
**characterized in that** the locking bow (16) has a bridging element (27) by means of which the locking bow (16) is connected to the first end portion (14), the locking element (17) having a through-slot (28) through which the bridging element (27) of the locking bow (16) is guided in the connected state.

6. Coolant conducting element (100) according to any of claims 1 to 5,
**characterized in that** the locking element (17) has a ramp shape.

7. Coolant conducting element (100) according to any of claims 1 to 6,
**characterized in that** the first end portion (14) has a first sealing surface (33) and **in that** the second end portion (15) has a second sealing surface (34), the first sealing surface (33) sealingly interacting with the second sealing surface (34).

8. Coolant conducting element (100) according to any of claims 1 to 7,
**characterized in that** the main body (10) has a spring-loaded seal (35) which interacts with a housing (200) that surrounds the coolant conducting element (100) in an installed state.

9. Cooling system (300) for cooling an electric machine (400), comprising
an inlet opening (60) for supplying a coolant,
an outlet opening (61) for discharging the coolant,
a cooling channel (63) along which coolant exiting from the inlet opening (60) flows during a cooling process and along which the coolant flows to the outlet opening (61) during the cooling process,
wherein a coolant conducting element (100) which is designed according to any of claims 1 to 8 is arranged on the cooling channel (63).

## Revendications

1. Élément de guidage de liquide de refroidissement (100) pour un système de refroidissement (300) destiné au refroidissement d'une machine électrique (400), comportant un corps de base (10) sur lequel, au niveau d'une surface périphérique (11) du corps de base (10) orientée radialement vers l'intérieur, est disposé au moins un élément de guidage (12) destiné au guidage d'un liquide de refroidissement, dans lequel le corps de base (10) présente une première section d'extrémité (14) et une seconde section d'extrémité (15), dans lequel le corps de base (10) adopte une forme annulaire dans un état assemblé de la première section d'extrémité (14) à la seconde section d'extrémité (15), dans lequel la première section d'extrémité (14) est reliée par serrage élastique à la seconde section d'extrémité (15) dans l'état assemblé, **caractérisé en ce que**, pour la réalisation du serrage élastique, la première section d'extrémité (14) présente un levier d'enclenchement (16) de conception élastique, qui, à l'état assemblé, s'enclenche derrière un élément d'enclenchement (17) de la seconde section d'extrémité (15).

2. Élément de guidage de liquide de refroidissement (100) selon la revendication 1, **caractérisé en ce que** le levier d'enclenchement (16) présente une première section élastique (18) et une seconde section élastique (19), dans lequel la première section élastique (18) et la seconde section élastique (19) s'enclenchent derrière l'élément d'enclenchement (17) à l'état assemblé.

3. Élément de guidage de liquide de refroidissement (100) selon la revendication 1 ou 2, **caractérisé en ce que** le levier d'enclenchement (16) présente une surface de butée (25) qui coopère avec l'élément d'enclenchement (17) pour l'empêchement d'une surtension du levier d'enclenchement (16).

4. Élément de guidage de liquide de refroidissement (100) selon la revendication 3, **caractérisé en ce que** le levier d'enclenchement (16) présente une section centrale (20) sur laquelle est formée la surface de butée (25), dans lequel la première section élastique (18) est moulée sur un premier côté (21) de la section centrale (20) et la seconde section élastique (19) est moulée sur un second côté (22) de la section centrale (20), lequel second côté est opposé au premier côté (21).

5. Élément de guidage de liquide de refroidissement (100) selon l'une des revendications 1 à 4, **caractérisé en ce que** le levier d'enclenchement (16) présente une nervure (27) au moyen de laquelle le levier d'enclenchement (16) est relié à la première section d'extrémité (14), dans lequel l'élément d'enclenchement (17) présente une fente de passage (28) à travers laquelle la nervure (27) du levier d'enclenchement (16) est guidée à l'état assemblé.

6. Élément de guidage de liquide de refroidissement (100) selon l'une des revendications 1 à 5, **caractérisé en ce que** l'élément d'enclenchement (17) présente une forme de rampe.

7. Élément de guidage de liquide de refroidissement (100) selon l'une des revendications 1 à 6, **caractérisé en ce que** la première section d'extrémité (14) présente une première surface d'étanchéité (33) et **en ce que** la seconde section d'extrémité (15) présente une seconde surface d'étanchéité (34), dans lequel la première surface d'étanchéité (33) coopère de manière étanche avec la seconde surface d'étanchéité (34).

8. Élément de guidage de liquide de refroidissement (100) selon l'une des revendications 1 à 7, **caractérisé en ce que** le corps de base (10) présente un joint d'étanchéité (35) de conception élastique qui coopère avec un boîtier (200) entourant l'élément de guidage de liquide de refroidissement (100) à l'état monté.

9. Système de refroidissement (300) destiné au refroidissement d'une machine électrique (400), comportant
un orifice d'entrée (60) destiné à l'alimentation en liquide de refroidissement,
un orifice de sortie (61) destiné à l'évacuation du liquide de refroidissement,
un circuit de refroidissement (63), le long duquel s'écoule, pendant un processus de refroidissement, le liquide de refroidissement sortant de l'orifice d'entrée (60) et le long duquel, pendant le processus de refroidissement, le liquide de refroidissement s'écoule vers l'orifice de sortie (61),
dans lequel un élément de guidage de liquide de refroidissement (100), conçu selon l'une des revendications 1 à 8, est disposé sur le circuit de refroidissement (63).
